**Europäisches Patentamt**

**European Patent Office**

**Office européen des brevets**

(19)

(11) Veröffentlichungsnummer: **0 074 671**
**B1**

(12) **EUROPÄISCHE PATENTSCHRIFT**

(45) Veröffentlichungstag der Patentschrift:
**09.12.87**

(51) Int. Cl.⁴: **F 16 D 25/04,** F 16 D 25/08

(21) Anmeldenummer: **82108515.6**

(22) Anmeldetag: **15.09.82**

(54) **Druckmittelbetätigte Ausrückvorrichtung für Kupplungen, insbesondere für Kraftfahrzeugkupplungen.**

(30) Priorität: **15.09.81 DE 3136548**

(43) Veröffentlichungstag der Anmeldung:
**23.03.83 Patentblatt 83/12**

(45) Bekanntmachung des Hinweises auf die Patenterteilung:
**09.12.87 Patentblatt 87/50**

(84) Benannte Vertragsstaaten:
**AT CH DE IT LI NL SE**

(56) Entgegenhaltungen:
**DE - A - 2 217 943**
**DE - A - 2 348 044**
**DE - A - 2 923 487**
**FR - A - 2 194 263**
**GB - A - 635 148**
**US - A - 2 890 776**

(73) Patentinhaber: **LuK Lamellen und Kupplungsbau GmbH, Industriestrasse 3, D-7580 Bühl/Baden (DE)**

(72) Erfinder: **Huber, Lothar, Schöllmattweg 6, D-7580 Bühl-Altschweier (DE)**

(74) Vertreter: **Bardehle, Heinz, Dipl.-Ing. et al, Patent- und Rechtsanwälte Bardehle-Pagenberg-Dost-Altenburg & Partner Galileiplatz 1 Postfach 86 06 20, D-8000 München 86 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine druckmittelbetätigbare Ausrückvorrichtung für Kupplungen, insbesondere für Kraftfahrzeugkupplungen, nach dem Oberbegriff des Patentanspruchs 1, wie sie in der DE-A2 217 943 beschrieben ist.

Diese vorbekannte Ausrückvorrichtung besteht aus einem Gehäuse, welches eine einseitig offene Ringkammer bildet, einem in diese Ringkammer eintauchenden Ringkolben, einem in diesem Ringkolben aufgenommenen Ausrücklager und einer zwischen dem Ringkolben und dem Gehäuse wirksamen Rollmembran, die radial innen und aussen am Gehäuse festgelegt sowie mit ihrer zur Offenseite der Ringkammer hinweisenden Aussenwand am Ringkolben anliegt und zwischen diesem und einer Aussenwand des Gehäuses einerseits und einer sich axial forterstreckenden Gehäuseinnenwand andererseits je eine Rollfalte bildet.

Bei dieser bekannten Ausrückvorrichtung ist der Kolben mit dem Ausrücklager mit radialem Spiel zwischen den die Gehäuseringkammer radial nach innen und aussen begrenzenden Gehäusewandungen aufgenommen und mithin nur durch die sich zwischen der Gehäuseaussenwand und dem Kolben einerseits und letzterem und der Gehäuseinnenwand bildenden Rollfalten höchst unzulänglich geführt. Bei Fluchtungsfehlern zwischen Getriebe und Kupplung können daher über den Umfang sehr unterschiedliche Abrollverhältnisse für die Rollmembran auftreten, was naturgemäss zu einem unbefriedigenden Betriebsverhalten, insbesondere aber zu übermässigem Verschleiss führt.

Weiterhin ist bei dieser bekannten Ausrückvorrichtung die Rollmembran gegen äussere Einwirkungen nicht geschützt, so dass diese beschädigt werden kann. Letzteres kann beispielsweise durch Ablagerung von Schmutz bzw. Partikeln auf den Abrollfalten der Membran bzw. den Flächen, auf der sie abrollt, erfolgen.

Bei einer solchen Ausrückvorrichtung, wie sie durch die DE-A-2 348 044 bekannt geworden ist, ist das Ausrücklager radial fest auf einem axialen Ansatz einer als Kolben dienenden Hülse angeordnet. Dabei erstreckt sich die als Kolben dienende Hülse in einem durch ein Gehäuse gebildeten Ringraum axial hinein und wirkt dort mit einer hydraulisch betätigbaren Rollmembran zusammen. Eine derart aufgebaute Ausrückvorrichtung weist erhebliche Nachteile auf; so z.B. ist ein grosser axialer Bauraum erforderlich, da das Ausrücklager am Ende des eigentlichen Kolbens und axial ausserhalb des Ringraumes angeordnet ist. Weiterhin kann der in der Praxis vorhandene Achsversatz zwischen der Rotationsachse der durch die Ausrückvorrichtung zu betätigenden Kupplung und der Rotationsachse des Ausrücklagers dieser Vorrichtung nicht ausgeglichen werden, da das Ausrücklager radial starr angeordnet ist. Dadurch ergibt sich ein erhöhter Verschleiss des Ausrücklagers sowie der mit diesem Lager zusammenwirkenden Ausrückmitteln der Kupplung. Weiterhin ist auch bei dieser Ausgestaltungsart der Ausrückvorrichtung die Rollmembran gegen äussere Einwirkungen nicht einwandfrei geschützt.

Durch die Erfindung soll daher eine gegenüber dem Stand der Technik bezüglich der Lebensdauer und der Zuverlässigkeit verbesserte Ausrückvorrichtung geschaffen werden. Weiterhin soll die erfindungsgemässe Ausrückvorrichtung in besonders einfacher und wirtschaftlicher Weise herstellbar sein.

Diese Aufgabe wird bei einem Gegenstand nach dem Oberbegriff des Anspruches 1 erfindungsgemäss durch dessen kennzeichnende Merkmale gelöst.

Durch einen derartigen Aufbau der Ausrückvorrichtung sind, unabhängig von auftretenden Fluchtungsfehlern zwischen Getriebe und Kupplung, die selbstverständlich nur innerhalb vorbestimmter Toleranzen hinnehmbar sind, dadurch gleichbleibende Abrollverhältnisse an der Rollmembran sichergestellt, dass der in die Ringkammer des Gehäuses eintauchende, axial bewegbar geführte Ringkolben über seinen gesamten Arbeitsweg präzise radial geführt ist. Diese Führung des Ringkolbens auf der Führungshülse kann dabei zweckmässigerweise als staubdichte Gleitführung ausgebildet sein. Darüber hinaus verhindert eine, entsprechend der Erfindung angeordnete Abdichtung das Eindringen von Fremdkörpern in den Bauraum, wo die Abrollmembran vorgesehen ist. Eine solche gegen den Durchtritt von Verunreinigungen, etwa Staub, sichere Abdichtung kann zwischen dem Ringkolben und der die Ringkammer nach aussen abschliessenden Gehäusewand vorgesehen werden, was durch die Ausbildung einer derartigen Abdichtung als Spaltdichtung oder aber auch Schleifringdichtung möglich ist, etwa in Form eines am Aussenmantel des Ringkolbens anliegenden Filzringes. Die Abdichtung kann jedoch auch durch eine Rollmembran verwirklicht werden, die der am Ringkolben anliegenden Arbeitsrollmembran entgegengesetzt abrollend angeordnet ist.

Eine einfache Verwirklichungsmöglichkeit einer derartigen Abdichtung ergibt sich, wenn das die Abdichtung vermittelnde Dichtungselement mit seinem äusseren Rand zwischen einem Ringflansch der die Ringkammer radial nach aussen begrenzenden Gehäusewand und einem damit verbundenen Halteflansch verspannt ist. Dieser Halteflansch kann sich radial einwärts von einem auf das freie Ende der mit einem entsprechenden Ringflansch versehenen Gehäusewand aufgeschobenen und auf dieser Aussenwand festgelegten Rohrabschnitt forterstrecken.

Bei einer Ausgestaltung der Erfindung ist nach Patentanspruch 11 eine wenigstens zweiteilige Gehäuseausbildung vorteilhaft, wobei das Gehäuse aus einer die einseitig offene Ringkammer wenigstens zum Teil bildenden, zur anderen Seite hin geschlossenen Gehäuseschale und der Führungshülse für den Ringkolben besteht, die sich als Gehäuseinnenwand von der Schale axial forterstreckt und demgemäss radial innen die den Ringkolben aufnehmende Gehäuseringkammer begrenzt. Alternativ kann eine wenigstens zweiteilige Gehäuseausbildung nach Patentanspruch 12 auch in der Weise verwirklicht sein, dass mit einer die einseitig offene Ringkammer wenigstens teilweise bildenden, zur anderen Seite hin geschlossenen Schale eine die Gehäuseaussenwand bildende und die Ringkammer radial nach aussen begrenzende Hülse verbunden ist, an der die äussere Rollfalte der Rollmembran abrollt.

Bei einer Gehäuseausbildung nach den vorstehend angegebenen Ausgestaltungen hat es sich als vorteilhaft erwiesen, die Rollmembran radial innen und/oder aussen mit einem Rand zwischen der Gehäuseschale und der mit dieser fest verbundenen, sich axial forterstreckenden Gehäuseinnenwand und/oder Gehäuseaussenwand einzuspannen und dadurch am Gehäuse festzulegen. Bei einer derartigen Ausgestaltung erstreckt sich die Rollmembran kreisscheibenartig über die Ringkammer und überspannt den in letztere eintauchenden Ringkolben, wobei die Rollfalten in der bereits oben erläuterten Weise, wie im übrigen bekannt, sich zwischen dem Kolben und den die Ringkammer radial begrenzenden Gehäusewänden bilden. Der Rand der Rollmembran kann dabei radial innen und/oder aussen durch die Einspannung zwischen Konusflächen festgelegt sein oder die Rollmembran kann auch radial innen und aussen Randwülste aufweisen, die zwischen der Gehäuseschale und der sich von dieser axial forterstreckenden Gehäuseinnenwand und/oder -aussenwand eingespannt sind.

Eine weitere wichtige Ausgestaltung der Erfindung ist durch die Ausbildung wenigstens der einseitig geschlossenen Gehäuseschale und/oder des Ringkolbens in Kunststoffausführung gekennzeichnet, was eine äusserst einfache Herstellbarkeit der fraglichen Teile ermöglicht. Wenn gemäss der Lehre des Patentanspruchs 17 die von der Führungshülse für den Ringkolben gebildete Gehäuseinnenwand und/oder die sich axial von der Gehäuseschale forterstreckende Gehäuseaussenwand als metallische Hülsen ausgebildet sind, ist einerseits eine sichere und weitestgehend wartungsfreie Führung eines aus Kunststoff bestehenden Kolbens auf der Führungshülse gewährleistet und andererseits gelingt es in einfacher Weise, eine feste Verbindung der metallischen Hülsen mit der einseitig geschlossenen Gehäuseschale dadurch herzustellen, dass die Hülsen ringflanschartige Bereiche der Schale umgreifen und an dieser mittels Umbördelungen festgelegt sind.

Zur Begrenzung der axialen Bewegbarkeit des Ringkolbens auf der genannten Führungshülse kann diese auf der vom Gehäuse entfernten Seite mit einem Anschlag versehen sein, der in einfacher Weise bei der Ausbildung der Führungshülse als metallische Hülse dadurch verwirklichbar ist, dass nach der Montage im Bereich des vom Gehäuse entfernten Endes der Hülse Haltenasen aus der Zylinderebene in die Bewegungsbahn der genannten Führungsfläche des Ringkolbens abgebogen werden. Auf diese Weise ist eine äusserst einfache Entspannsicherung der Ausrückvorrichtung verwirklicht und sichergestellt, dass bei der Lagerung, beim Transport oder bei der Montage der Ausrückvorrichtung der Ringkolben innerhalb seiner axialen Bewegbarkeit festgelegt ist.

Wie an sich bei derartigen Ausrückvorrichtungen bekannt, ist zwischen dem Gehäuse und dem Ringkolben eine den Kolben vom Gehäuse wegdrängende Feder verspannt. Diese Feder kann im Bereich der Gehäuseinnenwand angeordnet sein und sich einerseits an einer Schulter des Gehäuses abstützen und andererseits auf sich radial erstreckende Teile des Ringkolbens wirken. Eine andere Ausgestaltung ist dadurch gekennzeichnet, dass die zwischen dem Gehäuse und dem Ringkolben verspannte Feder das Gehäuse radial aussen konzentrisch umschliesst und sich einerseits an einer Gehäuseschulter abstützt und andererseits auf sich radial erstreckende Teile des Ringkolbens wirkt.

Nach einem besonders zweckmässigen Ausgestaltungsmerkmal kann die zwischen dem Gehäuse und dem Ringkolben verspannte Feder jedoch auch in der Ringkammer aufgenommen sein, so dass diese Feder auf den Kolbenboden wirkt. Zweckmässig hat sich dabei erwiesen, den Boden des Ringkolbens ringkammerinnenseitig mit einem Druckverteilungsring auszurüsten, an dem die zwischen dem Gehäuse und dem Ringkolben verspannte Feder angreift. Soweit eine sich durch die Ringkammer hindurcherstreckende und den Kolbenboden überspannende Rollmembran vorgesehen ist, wird die Rollmembran zwischen dem Druckverteilungsring und dem Kolbenboden aufgenommen und die Ränder des Druckverteilungsrings sind zweckmässigerweise radial nach innen und aussen von der Rollmembran wegweisend abgerundet, so dass in allen denkbaren Betriebsstellungen des Ringkolbens Beschädigungen der Rollmembran durch die genannte Feder und/oder den Druckverteilungsring ausgeschlossen sind. Darüber hinaus kann der Druckverteilungsring mit einem ringnutartigen Widerlager versehen sein, in das die auf den Kolben wirkende Windung der in der Kammer aufgenommenen Feder eingreift.

Eine besonders kleine axiale Baulänge ist verwirklichbar, wenn nach einem weiteren wichtigen Ausgestaltungsmerkmal der Erfindung die in der Ringkammer aufgenommene Feder eine Kegelfeder ist, die beim Zusammendrücken des Ausrücksystems, etwa infolge axialen Verschleisses der Kupplung, auf nahezu Planlage ineinanderdrückbar ist und, sofern die Widerlager für die beiden äusseren Windungen dieser Feder entsprechend gestaltet sind, sich selbst zentriert.

Schliesslich kann, ebenfalls in weiterer Ausgestaltung der Erfindung, die von der Offenseite der Ringkammer entfernte Gehäusewand mit Verrastungskonturen zum Festlegen der Vorrichtung an einer Kupplungsglocke bzw. der Wand eines Getriebes ausgerüstet sein. Diese Verrastungskonturen können sich von der Gehäusestirnwand forterstreckende Zapfen sein, die zweckmässigerweise radial wirkende Federabschnitte besitzen können, so dass beim Eingriff dieser Verrastungskonturen in entsprechende Verrastungsausnehmungen in der Kupplungsglocke oder einer Getriebegehäusewand eine sichere Festlegung der Vorrichtung gewährleistet ist.

Anhand der beigefügten Zeichnung sollen nachstehend einige Ausführungsformen der Erfindung erläutert werden. In schematischen Ansichten zeigen:

Fig. 1 einen Querschnitt durch eine erste Ausführungsform der erfindungsgemässen Ausrückvorrichtung, bei der die zwischen dem Gehäuse und dem Ringkolben verspannte Feder eine im Bereich der die Ringkammer radial nach innen begrenzenden Gehäuseinnenwand angeordnete zylindrische Schraubenfeder ist,

Fig. 2 in einer Ansicht wie in Fig. 1 eine abgewandelte Ausführungsform, bei der die zwischen dem Gehäuse- und dem Ringkolben verspannte Feder eine die Gesamtanordnung konzentrisch umschliessende zylindrische Schraubenfeder ist,

Fig. 3 ebenfalls in einer Ansicht wie in Fig. 1 eine weitere Alternativausbildung, bei der die zwischen dem Gehäuse und dem Ringkolben verspannte Feder eine in der Ringkammer aufgenommene Kegelfeder ist und

Fig. 4 eine Halbschnittansicht einer derartigen Ausrückvorrichtung mit sich auf der vom Ringkolben entfernten Seite von der Stirnwand des Gehäuses forterstreckenden Verrastungszapfen zum Festlegen der Vorrichtung an einer Kupplungsglocke bzw. einer Getriebegehäusewand.

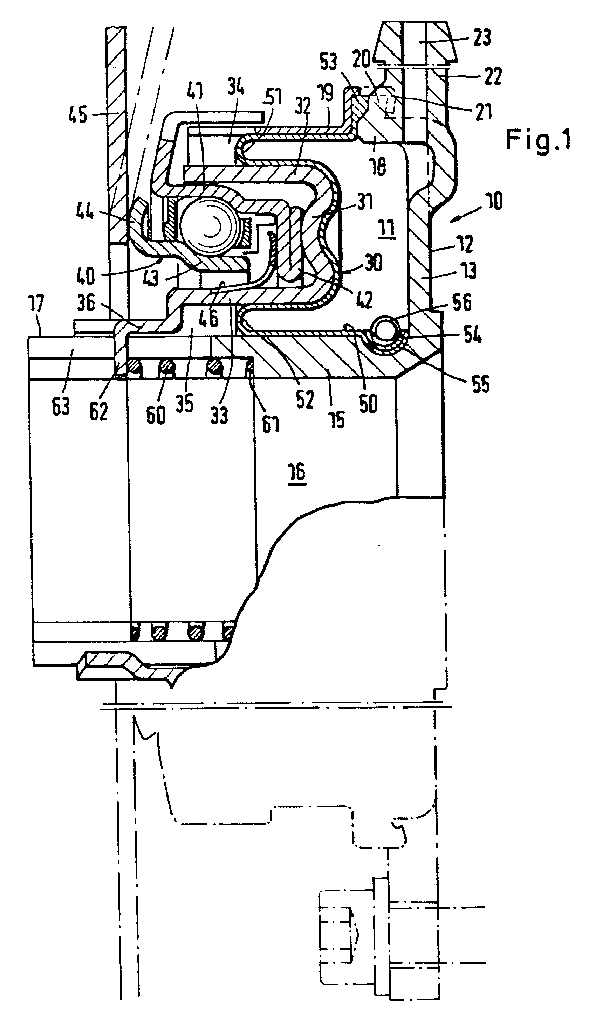

Bei der in Fig. 1 veranschaulichten Ausführungsform bildet das Gehäuse 10 eine einseitig offene Ringkammer 11 und besteht aus einer Kunststoffschale 12 mit einer stirnseitigen Rückwand 13, von der sich je eine diese Ringkammer radial innen und aussen begrenzende Gehäusewand axial forterstrecken. Die Gehäuseinnenwand 15 umschliesst eine Mittelausnehmung 16, durch die sich in der Einbaulage der Vorrichtung eine nicht dargestellte Getriebewelle hindurcherstreckt, und eine einstückig mit der Gehäuseschale ausgebildete Führungshülse 17 erstreckt sich auf der von der Gehäuserückwand 13 entfernten Seite axial fort. Die Gehäuseaussenwand, welche die Ringkammer 11 radial aussen umschliesst, besteht aus einem mit der Kunststoffschale 12 einstückig ausgebildeten Aussenwandabschnitt 18 und einer damit verbundenen metallischen Hülse 19, die einen Ringflansch 20 des Aussenwandabschnittes 18 umgreift und mittels einer Umbördelung 21 mit dem Aussenwandabschnitt 18 fest verbunden ist. Angeformt an die Gehäuseschale ist ein Stutzen 22 mit einem Kanal 23 zum Zuführen von Druckmedium zu der Ringkammer 11.

In die einseitig offene Ringkammer des Gehäuses 10 taucht ein in seiner Gesamtheit mit 30 bezeichneter Ringkolben ein, der bei dieser Ausführungsform als Ziehteil ausgebildet ist und je ein weit vom Kolbenboden 31 heruntergezogenes äusseres und inneres Kolbenhemd 32, 33 besitzt. Die Radialerstreckung des Ringkolbens 30 ist so bemessen, dass zwischen der Gehäuseinnenwand 15 und dem Kolbenhemd 33 einerseits und zwischen dem äusseren Kolbenhemd 32 und der die äussere Gehäusewand bildenden Hülse 19 Ringspalte 34, 35 etwa gleicher Radialerstreckungen auftreten. Vom inneren Kolbenhemd erstreckt sich ein auf der Führungshülse 17 des Gehäuses aufgenommener Führungsabschnitt 36 axial fort, der eine Gleitführung für den Kolben bildet und dessen präzise Führung auch in radialer Hinsicht vermittelt.

Innerhalb des als Hohlteil ausgebildeten Ringkolbens 30 ist ein in seiner Gesamtheit mit 40 bezeichnetes Ausrücklager axialfest, in radialer Hinsicht jedoch im Interesse einer Selbstzentrierung begrenzt bewegbar angeordnet. Der Aussenring 41 des Ausrücklagers ist zum Kolbenboden hin mit einem sich radial erstreckenden Abschnitt 42 ausgerüstet, der sich auf der von der Ringkammer 11 entfernten Seite des Kolbenbodens 31 abstützt. Der Innenring 43 besitzt einen sich nach der vom Kolbenboden 31 entfernten Seite forterstreckenden Fortsatz 44, der in bekannter Weise an einer nur angedeuteten Tellerfeder 45 einer im übrigen nicht weiter dargestellten Kupplung angreift. Bei begrenzt radialer Bewegbarkeit ist das Ausrücklager in axialer Hinsicht mittels eines tellerfederartigen Halteringes 46 festgelegt, welcher den Abschnitt 42 des Aussenrings 41 des Ausrücklagers hintergreift und mit seinem anderen Schenkel in eine innere Haltenut im Kolbenhemd 33 eingeschnappt ist.

Zwischen dem Gehäuse und dem Ringkolben wirkt eine die Ringkammer 11 überspannende und am Kolbenboden 31 anliegende Rollmembran 50, die in den Ringspalten 34, 35 zwischen der Gehäuseaussenwand und dem Kolben einerseits und zwischen letzterem und der die Ringkammer radial innen begrenzenden Gehäuseinnenwand andererseits je eine Rollfalte 51, 52 bildet. Die Rollmembran besitzt je einen am Gehäuse radial innen und aussen festgelegten Randwulst 53, 54. Der innere Randwulst 54 ist in einer sich von der Ringkammer 11 aus in die Gehäuseinnenwand 15 hineinerstreckenden Ringnut 55 aufgenommen und mittels eines mit radialer Vorspannung eingesetzten Sprengrings 56 festgelegt, während der äussere Ringwulst 53 zwischen dem Ringflansch 20 des Aussenwandabschnittes 18 und der damit verbundenen Hülse 19 verspannt ist.

Zwischen dem Gehäuse 10 und dem Ringkolben 30 mit dem Ausrücklager 40 befindet sich eine vorgespannte Druckfeder 60, die als zylindrische Schraubenfeder ausgebildet und im Bereich der Führungshülse 17 angeordnet ist. Diese vorgespannte Druckfeder stützt sich einerseits an einer Gehäuseschulter 61 ab und wirkt andererseits auf radial vom Führungsabschnitt 36 des Ringkolbens 30 abgebogene Zungen 62, die sich durch Längsnuten 63 in der Führungshülse 17 hindurcherstrecken.

Wenn über den Kanal 23 der Ringkammer 11 Druckmedium zugeführt wird, erfährt der Ringkolben 30 über die diesen überspannende Rollmembran 50 eine Druckmittelbeaufschlagung, was eine Verschiebung des Ringkolbens nach der von der Gehäuserückwand 13 wegweisenden Seite zur Folge hat. Demgemäss betätigt der auf die Tellerfeder 45 der im übrigen nicht gezeigten Kupplung wirkende Fortsatz 44 die Kupplung gegen die Wirkung der genannten Tellerfeder 45. Sobald die Druckmittelbeaufschalgung des Kolbens aufgehoben und ein Abströmen des in der Ringkammer befindlichen Druckmediums ermöglicht wird, kehrt der Ringkolben unter der Vorspannwirkung der Kupplungs-Tellerfeder in seine Ausgangslage zurück. Bei dieser Axialbewegung des Ringkolbens rollen die sich in den Ringspalten 34, 35 ausbildenden Rollfalten 51, 52 der Rollmembran an den Kolbenhemden einerseits und den die genannten Ringspalte begrenzenden Gehäusewänden andererseits ab. Der Ringkolben ist mittels des mit der Führungshülse 17 zusammenwirkenden Führungsabschnittes 36 präzise geführt.

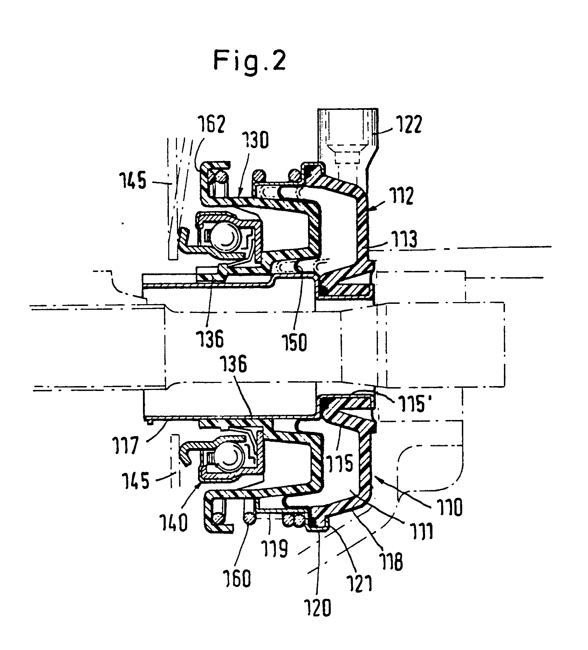

Bei der in Fig. 2 gezeigten Ausführungsform sind für gleiche Teile wie in Fig. 1 die gleichen Bezugszeichen verwendet, zur Unterscheidung jedoch um einhundert erhöht.

Im Unterschied zu der Ausführungsform nach Fig. 1 ist nicht nur die Gehäuseschale 112 als Kunststoffteil ausgebildet, sondern auch der Ringkolben 130. Bei der Führungshülse 117 für den Ringkolben 130 handelt es sich hingegen um eine sich radial innen von einem Innenwandabschnitt 115 der Gehäuseschale axial forterstreckende metallische Führungshülse 117, die mittels einer einen inneren Ringflansch 115 der Kunststoffschale 112 umgreifenden Umbördelung mit der Kunststoffschale fest verbunden ist und die Gehäuseringkammer radial innen begrenzt. Die Gehäuseaussenwand besteht wiederum aus einem Wandabschnitt 118 und einer sich axial davon forterstreckenden äusseren Hülse 119, die mit einem Ringflansch des Aussenwandabschnittes 118 mittels einer Umbördelung fest verbunden ist. Die Rollmembran 150 überspannt den Ringkolben und ist mit je einem inneren und äusseren Ringwulst radial innen und aussen durch die Einspannung dieser Ringwülste zwischen der Führungshülse 117 und einem entsprechenden Wandabschnitt 115 der Kunststoffschale einerseits und der Hülse 119 und dem Ringflansch 120 andererseits festgelegt.

Ein weiterer wesentlicher Unterschied zu der Ausführungsform nach Fig. 1 besteht darin, dass die zwischen dem Ringkolben 130 und dem Gehäuse verspannte Druckfeder 160 eine das Gehäuse mit dem Ringkolben konzentrisch umschliessende zylindrische Schraubenfeder ist, die sich einerseits gegen die Umbördelung 121 der einen Teil der Gehäuseaussenwand bildenden Hülse 119 abstützt und andererseits an einem die Gehäuseaussenwand umgreifenden Widerlager 162 des Ringkolbens 130 angreift.

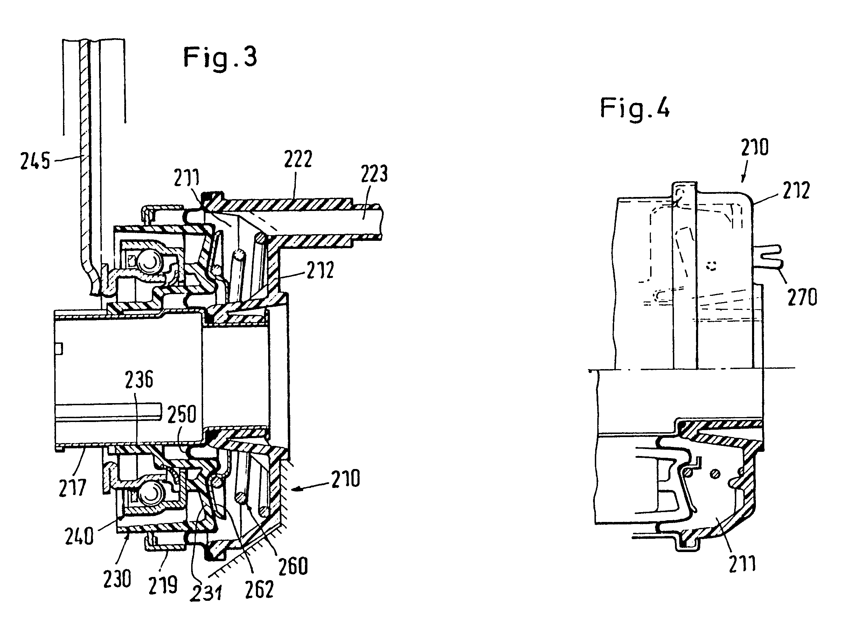

Die Ausführungsform nach Fig. 3, bei der für gleiche Teile wie in den Fig. 1 und 2 wiederum gleiche Bezugszeichen verwendet worden sind, jedoch um abermals einhundert erhöht, unterscheidet sich von den oben erläuterten Ausführungsformen insbesondere dadurch, dass die zwischen dem Gehäuse 210 und dem Ringkolben 230 wirkende Druckfeder 260 in der Ringkammer 211 angeordnet und als Kegelfeder ausgebildet ist. Das kolbenseitige Widerlager für diese Druckfeder besteht aus einem Druckverteilungsring 262, der den Ringkolbenboden überdeckt und eine ringnutartige Vertiefung für die Aufnahme der anliegenden Federwindung aufweist. Zwischen diesem Druckverteilungsring 262 und dem Kolbenboden 231 ist die den Kolbenboden überspannende Rollmembran 50 aufgenommen, deren Ränder in der oben bei der Ausführungsform nach Fig. 2 erläuterten Weise zwischen Wandabschnitten der Gehäuseschale 212 und der die Ringkammer radial innen begrenzenden Führungshülse 217 einerseits und der einen Teil der Gehäuseaussenwand bildende Hülse 219 andererseits eingespannt sind. Die äusseren Ränder des Druckverteilungsringes sind mit vom Kolbenboden 231 wegweisenden Abrundungen versehen, die jedwede Beschädigung der Rollmembran bei den in Betracht kommenden Axialbewegungen des Ringkolbens 230 ausschliessen. Ein bedeutendes Merkmal dieser Ausführungsform besteht darin, dass eine äusserst geringe axiale Baulänge verwirklichbar ist, weil beim Zusammendrücken des Ausrücksystems, etwa bei maximalem Verschleiss der Kupplung, die Feder auf nahezu Planlage zusammendrückbar ist.

Weitere Unterschiede, wie die Anordnung des Stutzens 222 mit dem Kanal 223 für das Zuführen von Druckmedium zur Ringkammer 211 parallel zur Systemachse interessieren hier nicht. Hinsichtlich der Kolbenführung auf der Führungshülse 217 mit einem Führungsabschnitt 236 und hinsichtlich der Anordnung und Funktionsweise des Ausrücklagers 240 in Zusammenwirkung mit der nur angedeuteten Tellerfeder 245 einer im übrigen nicht dargestellten Kupplung bestehen keine Unterschiede gegenüber der Ausführungsform nach Fig. 2.

Fig. 4 schliesslich veranschaulicht bei einer Ausführungsform gemäss Fig. 3 die Anordnung von Verrastungskonturen 270, die sich von der rückseitigen Stirnwand der Gehäuseschale 212 axial forterstrecken und mit radial wirkenden Federzungen ausgerüstet sind. Diese Verrastungskonturen dienen der Festlegung der Vorrichtung an einer Kupplungsglocke oder einer Getriebegehäusewand, indem die Verrastungszapfen in entsprechende Verrastungsausnehmungen der Kupplungsglocke oder Getriebegehäusewand eingreifen und dabei eine lagerichtige Zuordnung der Ausrückvorrichtung zum übrigen System gewährleisten.

**Patentansprüche**

1. Druckmittelbetätigte Ausrückvorrichtung für Reibungskupplungen, insbesondere für Kraftfahrzeugkupplungen, bestehend aus einem einseitig offenen, eine Ringkammer (11, 111, 211) bildenden feststehenden Gehäuse (10, 110, 210), einem in diese Ringkammer eintauchenden axial bewegbaren Ringkolben (30, 130, 230) mit Ausrücklager (40, 140, 240) und einer zwischen dem Ringkolben (30, 130, 230) und dem Gehäuse (10, 110, 210) wirksamen Rollmembran (50, 150, 250), die radial innen und aussen am Gehäuse (10, 110, 210) festgelegt ist, mit ihrer zur Offenseite der Ringkammer (11, 111, 211) hinweisenden Aussenwand am Ringkolben anliegt und in je einem Ringspalt (34, 35) zwischen dem Ringkolben (30, 130, 230) und einer sich axial forterstreckenden Aussenwand (19, 119, 219) des Gehäuses (10, 110, 210) einerseits und einer sich axial forterstreckenden Gehäuseinnenwand (15, 117, 217) andererseits je eine Rollfalte bildet, wobei das Ausrücklager (40, 140, 240) in radialer Richtung relativ zum Gehäuse (10, 110, 210) verlagerbar ist, dadurch gekennzeichnet, dass eine begrenzte radiale Verlagerung des unabhängig vom Ringkolben gebildeten Ausrücklagers (40, 140, 240) relativ gegenüber dem als Hohlkörper ausgebildeten Ringkolben (30, 130, 230), in dem es aufgenommen ist, ermöglicht ist, während eine die Gehäuseinnenwand darstellende, mit dem Gehäuse (10, 110, 210) verbundene Hülse (17, 117, 217) die ausschliessliche, in radialer Richtung feste und axiale Gleitführung für den hierauf über einen ihm zugeordneten radial inneren Führungsabschnitt (36, 136, 236) geführten Ringkolben (30, 130, 230) bildet.

2. Ausrückvorrichtung nach Anspruch 1, dadurch gekennzeichnet, dass zumindest die zwischen der die Ringkammer (11, 111, 211) nach aussen abschliessenden Gehäuseaussenwand (19, 119, 219) und dem Ringkolben (30, 130, 230) vorgesehenen Rollfalte der Rollmembran (50, 150, 250) zum Aussenraum durch eine gegen Durchtritt von Verunreinigungen, wie etwa Staub, sichere Abdichtung geschützt ist.

3. Ausrückvorrichtung nach Anspruch 1 oder 2, dadurch gekennzeichnet, dass die Abdichtung zwischen dem Ringkolben (30, 130, 230) und der die Ringkammer nach aussen abschliessenden Gehäusewand (19, 119, 219) eine Spaltdichtung ist.

4. Ausrückvorrichtung nach einem der Ansprüche 1 bis 3, dadurch gekennzeichnet, das die Abdichtung zwischen dem Ringkolben (30, 130, 230) und der die Ringkammer nach aussen abschliessenden Gehäuseaussenwand (19, 119, 219) eine Schleifdichtung ist.

5. Ausrückvorrichtung nach einem der Ansprüche 1 bis 3, dadurch gekennzeichnet, dass die Dichtung an der die Ringkammer (11, 111, 211) nach aussen abschliessenden Gehäusewand (19, 119, 219) befestigt ist und gleitend am Ringkolben (30, 130, 230) anliegt.

6. Ausrückvorrichtung nach einem der Ansprüche 1 bis 5, dadurch gekennzeichnet, dass die Dichtung aus einem am Ausenmantel des Ringkolbens (30, 130, 230) anliegenden luftdurchlässigen, jedoch staubdichten Element besteht, wie aus einem Filzring.

7. Ausrückvorrichtung nach mindestens einem der vorhergehenden Ansprüche, dadurch gekennzeichnet, dass die Abdichtung zwischen dem Ringkolben (30, 130, 230) und der die Ringkammer nach aussen umschliessenden Gehäuseaussenwand (19, 119, 219) aus einer Rollmembran besteht, die der am Ringkolben anliegenden Arbeitsmen Rollmembran (50, 150, 250) entgegengesetzt abrollend angeordnet ist.

8. Ausrückvorrichtung nach einem der Ansprüche 1 bis 7, dadurch gekennzeichnet, dass das die Abdichtung zwischen dem Ringkolben (30, 130, 230) und der die Ringkammer nach aussen abschliessenden Gehäusewand (19, 119, 219) vermittelnde Dichtungselement mit seinem äusseren Rand zwischen einem Ringflansch der äusseren Gehäusewand und einem damit verbundenen Halteflansch verspannt ist.

9. Ausrückvorrichtung nach Anspruch 8, dadurch gekennzeichnet, dass sich der Halteflansch radial einwärts von einem auf das freie Ende der mit einem entsprechenden Ringflansch versehenen Gehäusewand (19, 119, 219) aufgeschoben und auf dieser Aussenwand festgelegten Rohrabschnitt forterstreckt.

10. Ausrückvorrichtung nach einem der Ansprüche 1 bis 9, gekennzeichnet durch eine staubdichte Gleitführung des Ringkolbens (30, 130, 230) auf der Führungshülse (17, 117, 217).

11. Ausrückvorrichtung nach einem der Ansprüche 1 bis 10, gekennzeichnet durch eine wenigstens zweiteilige Gehäuseausbildung aus einer die einseitig offene Ringkammer (111, 211) wenigstens zum Teil bildenden, zur anderen Seite hin geschlossenen Gehäuseschale (112, 212) und der damit befestigten, sowohl als Führung (117, 217) für den Ringkolben (130, 230), als auch als Abstützung für die Rollmembran (150, 250) dienenden, sich als Gehäuseinnenwand von der Schale axial forterstreckende Hülse (117, 217).

12. Ausrückvorrichtung nach einem der Ansprüche 1 bis 11, gekennzeichnet durch eine wenigstens zweiteilige Gehäuseausbildung aus einer die einseitig offene Ringkammer (11, 111, 211) wenigstens teilweise bildenden, zur anderen Seite hin geschlossenen Schale (12, 112, 212) und aus einer mit dieser verbundenen, sich axial von der Schale forterstreckenden und die Ringkammer verlängernden Hülse (19, 119, 219), welche einen Teil der Gehäuseaussenwand bildet, an der radial aussen die äussere Rollfalte der Rollmembran (50, 150, 250) abrollt.

13. Ausrückvorrichtung nach einem der Ansprüche 1 bis 12, dadurch gekennzeichnet, dass die Rollmembran (150, 250) radial innen und/oder aussen mit einem Rand zwischen der Gehäuseschale (112, 212) und der mit dieser fest verbundenen, sich axial forterstreckenden Gehäuseinnenwand (117, 217) und/oder Gehäuseaussenwand (119, 219) eingespannt und dadurch am Gehäuse festgelegt ist.

14. Ausrückvorrichtung nach Anspruch 13, dadurch gekennzeichnet, dass der Rand der Rollmembran (150, 250) radial innen und/oder aussen durch die Einspannung zwischen Konusflächen festgelegt ist.

15. Ausrückvorrichtung nach Anspruch 14, dadurch gekennzeichnet, dass ein Randwulst der Rollmembran (150, 250) radial innen und/oder aussen zwischen der Gehäuseschale und der sich von dieser axial forterstreckenden Gehäuseinnenwand und/oder Gehäuseaussenwand eingespannt ist.

16. Ausrückvorrichtung nach einem der Ansprüche 1 bis 15, gekennzeichnet durch die Ausbildung wenigstens der einseitig geschlossenen Gehäuseschale (12, 112, 212) und/oder des Ringkolbens (30, 130, 230) in Kunststoffausführung.

17. Ausrückvorrichtung nach einem der Ansprüche 1 bis 16, dadurch gekennzeichnet, dass die von der Führungshülse (117, 217) für den Ringkolben gebildete Gehäuseinnenwand und/oder die sich axial von der in Kunststoffausführung hergestellten Gehäuseschale forterstreckende Gehäuseaussenwand (119, 219) als metallische Hülsen ausgebildet sind.

18. Ausrückvorrichtung nach Anspruch 17, gekennzeichnet durch die feste Verbindung der metallischen Hülsen (117, 217; 119, 219) mit der einseitig geschlossenen Gehäuseschale (112, 212) aus Kunststoff in der Weise, dass die Hülsen ringflanschartige Bereiche der Schale umgreifen und mittels Umbördelungen festgelegt sind.

19. Ausrückvorrichtung nach einem der Ansprüche 1 bis 18, dadurch gekennzeichnet, dass die Führungshülse (17, 117, 217) auf der vom Gehäuse entfernten Seite des Ringkolbens (30, 130, 230) mit einem Anschalg zur Begrenzung der Axialbewegbarkeit des Kolbens versehen ist.

20. Ausrückvorrichtung nach einem der Ansprüche 1 bis 19, dadurch gekennzeichnet, dass zwischen dem Gehäuse (210) und dem Ringkolben (230) eine den Kolben vom Gehäuse wegdrängende Kegelfeder (260) verspannt ist.

21. Ausrückvorrichtung nach einem der Ansprüche 1 bis 20, dadurch gekennzeichnet, dass der Ringkolben (30) mit radial nach innen gerichteten Bereichen (62) in Längsnuten (63) der Führungshülse (17) eingreift.

22. Ausrückvorrichtung nach Anspruch 21, dadurch gekennzeichnet, dass eine zwischen dem Gehäuse und dem Ringkolben verspannte Feder (60) im Bereich radial innerhalb der Hülse (17) angeordnet ist und sich einerseits an einer Schulter (61) des Gehäuses abstützt und andererseits auf die sich radial nach innen und durch die Hülse (17) erstreckenden Teile (62) des Ringkolbens (30) wirkt.

23. Ausrückvorrichtung nach einem der Ansprüche 1 bis 22, dadurch gekennzeichnet, dass eine zwischen dem Gehäuse (110) und dem Ringkolben (130) verspannte Feder (160) das Gehäuse radial aussen konzentrisch umschliesst und sich einerseits an einer Gehäuseschulter (120) abstützt und andererseits auf sich radial nach aussen erstreckende Teile (162) des Ringkolbens (130) wirkt.

24. Ausrückvorrichtung nach Anspruch 20, dadurch gekennzeichnet, dass die zwischen dem Gehäuse und dem Ringkolben verspannte Kegelfeder (260) in der vom Druckmedium gefüllten Ringkammer (211) aufgenommen ist und auf den Boden des Ringkolbens (230) wirkt.

25. Ausrückvorrichtung nach Anspruch 24, dadurch gekennzeichnet, dass der Boden des Ringkolbens (230) ringkammerinnenseitig mit einem Druckverteilungsring (262) ausgerüstet ist, an dem die zwischen dem Gehäuse und dem Ringkolben verspannte Kegelfeder (260) angreift.

26. Ausrückvorrichtung nach Anspruch 24, dadurch gekennzeichnet, dass die den Kolbenboden überspannende Rollmembran (250) zwischen dem Druckverteilungsring (262) und dem Kolbenboden aufgenommen ist und dass die Ränder des Druckverteilungsringes radial innen und aussen von der Rollmembran wegweisend abgerundet sind.

27. Ausrückvorrichtung nach Anspruch 25 oder 26, dadurch gekennzeichnet, dass der Druckverteilungsring (262) mit einem ringnutartigen Widerlager versehen ist, in das die auf den Kolben (230) wirkende Windung der in der Kammer aufgenommenen Kegelfeder (260) eingreift.

28. Ausrückvorrichtung nach einem der Ansprüche 1 bis 27, dadurch gekennzeichnet, dass die von der Offenseite der Ringkammer (211) entfernte Gehäusewand mit Verrastungskonturen (270) zum Festlegen der Vorrichtung an einer Kupplungsglocke bzw. der Wand eines Getriebegehäuses ausgerüstet ist.

29. Ausrückvorrichtung nach Anspruch 28, dadurch gekennzeichnet, dass die Verrastungskonturen sich von der Gehäusestirnwand forterstreckende Zapfen (270) sind.

30. Ausrückvorrichtung nach Anspruch 28 oder 29, dadurch gekennzeichnet, dass die als Verrastungskonturen dienenden Zapfen (270) mit radial wirkenden Federabschnitten versehen sind.

**Claims**

1. Fluid-pressure operated release assembly for friction coupling apparatus, particularly vehicle clutches, comprising a stationary casing (10, 110, 210) open on one side and defining an annular cavity (11, 111, 211), an annular piston member (30, 130, 230) axially movable to extend into said annular cavity and having associated therewith a release bearing (40, 140, 240) and a rolling membrane (50, 150, 250) acting between annular piston member (30, 130, 230) and casing (10, 110, 210) and secured radially inwardly and outwardly to casing (10, 110, 210), said rolling membrane engaging the annular piston member by its outer wall adjacent the opening of annular cavity (11, 111, 211) and forming a rolling fold in each one of annular gaps (34, 35) defined between annular piston (30, 130, 230) and an axially extending outer wall (19, 119, 219) of casing (11, 110, 210), on the one hand, and an axially extending casing inner wall (15, 117, 217), on the other hand, with release bearing (40, 140, 240) being adapted for displacement In a radial direction relative to casing (10, 110, 210), characterized by release bearing (40, 140, 240) being independent from and received in annular piston member (30, 130, 230), which has the form of a hollow member, and being arranged therein for limited radial displacement, and by a sleeve member (17, 117, 217) forming the inner wall of and coupled to casing (10, 110, 210) and providing the sole guidance for the radially fixed and axial sliding movement of annular piston member (30, 130, 230), which is placed over said sleeve member on an intervening, radially inner guide portion (36, 136, 236) associated therewith.

2. Release assembly as in claim 1, characterized in that at least the rolling fold of membrane (50, 150, 250) which is disposed between annular piston member (30, 130, 230) and the outer casing wall (19, 119, 219) externally defining annular cavity (11, 111, 211) is protected by sealing means to prevent the ingress of pollutants such as dust.

3. Release assembly as in claim 1 or 2, characterized in that the seal between annular piston member (30, 130, 230) and the casing wall (19, 119, 219) externally defining said annular cavity being a gap seal arrangement.

4. Release assembly as in any one of claims 1–3, characterized by the seal between annular piston member (30, 130, 230) and outer casing wall (19, 119, 219) externally defining said annular cavity being a friction seal.

5. Release assembly as in any one of claims 1–3, characterized by the seal being secured to casing wall (19, 119, 219) externally defining annular cavity (11, 111, 211) so as to slidingly engage annular piston member (30, 130, 230).

6. Release assembly as in any one of claims 1–5, characterized by the seal comprising a member which is permeable to air but impermeable to dust and engages the outer annular surface of annular piston member (30, 130, 230), such as a ring of felt.

7. Release assembly as in any one of several of the preceding claims, characterized by the sealing structure between annular piston member (30, 130, 230) and casing wall (19, 119, 219) externally defining the annular cavity comprising a rolling membrane arranged to roll in a direction opposite to the working rolling membrane (50, 150, 250) engaging said annular piston member.

8. Release assembly as in any one of claims 1–7, characterized in that the element affording the seal between annular piston member (30, 130, 230) and casing wall (19, 119, 219) externally defining the annular cavity has its peripheral adge clamped between an annular flange on the outer casing wall and a retaining flange connected therewith.

9. Release assembly as in claim 8, characterized by the retaining flange extending radially inwardly from a tubular section disposed on and secured to the free end of casing wall (19, 119, 219), said casing wall having a corresponding annular flange thereon.

10. Release assembly as in any one of claims 1–9, characterized by annular piston member (30, 130, 230) being guided for dust-proof sliding movement on sleeve member (17, 117, 217).

11. Release assembly as in any one of claims 1–10, characterized by the casing consisting of at least two sections, said sections comprising a casing shell member (112, 212) defining at least part of said annular cavity (111, 211) open on one side and closed on the other, and a sleeve (117, 217) extending axially away from said shell member to form the inner casing wall and secured thereto as a guide element (117, 217) for annular piston member (130, 230) and for supporting rolling membrane (150, 250).

12. Release assembly as in any one of claims 1–11, characterized by the casing consisting of at least two sections, said sections comprising a shell member (12, 112, 212) defining at least part of said annular cavity (11, 111, 211) open on one side and closed on the other, and a sleeve member (19, 119, 219) secured thereto and extending axially away from said shell member to form an extension of said annular cavity, said sleeve member forming a portion of the outer casing wall which has the radially outer fold of membrane (50, 150, 250) thereon in a rolling engagement.

13. Release assembly as in any one of claims 1–12, characterized in that rolling membrane (150, 250) is held radially outwardly and/or inwardly by an edge thereof clamped between casing shell member (112, 212) and outer casing wall (119, 219) and/or axially extending inner casing wall (117, 217) secured to said shell member, whereby the rolling membrane is secured to the casing.

14. Release assembly as in claim 13, characterized in that the edge of rolling membrane (150, 250) is secured inwardly and/or outwardly by being clamped between conical surfaces.

15. Release assembly as in claim 14, characterized by a beaded edge of rolling membrane (150, 250) being clamped radially inwardly and/or outwardly between the casing shell member and the casing inner and/or outer wall members extending axially away therefrom.

16. Release assembly as in any one of claims 1–15, characterized by at least casing shell member (12, 112, 212), which is open on one side, and/or annular piston member (30, 130, 230) being formed of plastics material.

17. Release assembly as in any one of claims 1–16, characterized in that the inner casing wall formed by the guide sleeve (117, 217) for the annular piston member, and/or the outer casing wall (119, 219) extending axially away from the casing shell member made of plastic, are made in the form of tubular members of metal.

18. Release assembly as in claim 17, characterized by a high-strength connection established between tubular metal members (117, 217; 119, 219) and casing shell member (112, 212) of plastic, which is open on one side, by way of said tubular members extending over annular peripheral portions of said shell member and being secured by being flanged thereonto.

19. Release assembly as in any one of claims 1–18, characterized by guide sleeve (17, 117, 217) having on the side of annular piston member (30, 130, 230) facing away from the casing abutment structure for limiting axial movement of the piston member.

20. Release assembly as in any one of claims 1–19, characterized by a conical spring (260) placed under tension between casing (210) and annular piston member (230) to urge the latter away from the casing.

21. Release assembly as in any one of claims 1–20, characterized by annular piston member (30) having radially inwardly directed portions (62) engaging longitudinal grooves (63) in guiding sleeve (17).

22. Release assembly as in claim 21, characterized by a spring (60) placed under tension between the casing and the annular piston member in a region radially inward of sleeve (17), with one end of said spring supported on a shoulder (61) formed on the casing and the other end acting on parts (62) of annular piston member (30) which extend radially inwardly and through sleeve (17).

23. Release assembly as in any one of claims 1–22, characterized by a spring (160) placed under tension between casing (110) and annular piston member (130) and concentrically surrounding the former, with one end of said spring supported on a shoulder (120) formed on the casing and its other end acting on radially outwardly extending portions (162) of annular piston member (130).

24. Release assembly as in claim 20, characterized in that conical spring (260) placed under tension between the casing and the annular piston member is received in annular fluid-filled cavity (211) and acts on the bottom of annular piston member (230).

25. Release assembly as in claim 24, characterized in that the bottom of annular piston member (230) has on the cavity side thereof annular pressure distributing structure (262) to receive the forces exerted by conical spring (260) placed between the casing and the annular piston member.

26. Release assembly as in claim 24, characterized by rolling membrane (250) overlying the bottom of the piston member and being received between said pressure distributing structure (262) and the bottom of the piston member, and by the edges of the annular pressure distributing structure being radiused radially inwardly and outwardly away from the rolling membrane.

27. Release assembly as in claim 25 or 26, characterized by annular pressure distributing structure (262) having abutment means in the form of an annular groove to receive the turn acting upon piston member (230) of conical spring (260) received in the cavity.

28. Release assembly as in any one of claims 1–27, characterized by the casing wall facing away from the opening of annular cavity (211) having thereon engagement structure for securing the assembly on a clutch bell or on the walls of a gear box.

29. Release assembly as in claim 28, characterized by said engagement structure comprising boss elements extending from the end surface of the casing.

30. Release assembly as in claim 28 or 29, characterized in that the boss elements serving as said engagement structure have radially acting spring portions.

**Revendications**

1. Dispositif de débrayage à commande par fluide sous pression, pour embrayages à friction, en particulier pour embrayages de véhicules automobiles, comportant un carter fixe (10, 110, 210) formant une chambre annulaire (11, 111, 211) et ouvert d'un côté, un piston annulaire (30, 130, 230), mobile dans le sens axial, qui s'étend dans cette chambre, avec un palier de débrayage (40, 140, 240) et une membrane souple (50, 150, 250) entre le piston annulaire (30, 130, 230) et le carter (10, 110, 210) qui est fixée radialement vers l'intérieur et vers l'extérieur sur le carter (10, 110, 210) dont la face extérieure tournée vers le côté ouvert de la chambre annulaire (11, 111, 211) s'appuie sur le piston annulaire et qui forme un pli souple dans chacune des fentes annulaires (34, 35) entre le piston annulaire (30, 130, 230) et une paroi extérieure (19, 119, 219) du carter (11, 110, 210) s'étendant axialement d'une part et une paroi intérieure du carter (15, 117, 217) s'étendant axialement, d'autre part, alors que le palier de débrayage (40, 140, 240) peut être déplacé dans le sens radial par rapport au carter (10, 110, 210), caractérisé en ce que le palier d'embrayage (40, 140, 240), qui est indépendant du piston annulaire (30, 130, 230) peut être déplacé radialement de façon limitée par rapport à celui-ci qui est réalisé sous forme d'un corps creux dans lequel le palier est contenu, tandis qu'un manchon (17, 117, 217) formant paroi intérieure du carter (10, 110, 210) et relié à celui-ci constitue une glissière exclusivement axiale, fixe dans le sens radial, pour le piston annulaire (30, 130, 230) qui est guidé au moyen d'un élément de guidage radial intérieur (36, 136, 236) fixé sur lui.

2. Dispositif de débrayage selon la revendication 1, caractérisé en ce qu'au moins le pli souple de la membrane souple (50, 150, 250) prévu entre la paroi extérieure du carter (19, 119, 219) qui délimite vers l'extérieur la chambre annulaire (11, 111, 211) et le piston annulaire (30, 130, 230), est protégé vis-à-vis de l'extérieur par une garniture d'étanchéité sûre contre la pénétration de salissures, telles que les poussières.

3. Dispositif de débrayage selon la revendication 1 ou 2, caractérisé en ce que la garniture d'étanchéité entre le piston annulaire (30, 130, 230) et la paroi extérieure du carter (19, 119, 219) qui délimite vers l'extérieur la chambre annulaire est un joint labyrinthe.

4. Dispositif de débrayage selon une des revendications 1 à 3, caractérisé en ce que la garniture d'étanchéité entre le piston annulaire (30, 130, 230) et la paroi extérieure du carter (19, 119, 219) qui délimite vers l'extérieur la chambre annulaire est un joint à friction.

5. Dispositif de débrayage selon une des revendications 1 à 3, caractérisé en ce que la garniture d'étanchéité est fixée sur la paroi du carter (19, 119, 219) délimitant la chambre annulaire (11, 111, 211) vers l'extérieur et s'appuie en glissant sur le piston annulaire (30, 130, 230).

6. Dispositif de débrayage selon une des revendications 1 à 5, caractérisé en ce que la garniture d'étanchéité est constituée par un élément perméable à l'air mais étanche à la poussière tel qu'une bague de feutre qui s'appuie sur l'enveloppe extérieure du piston annulaire (30, 130, 230).

7. Dispositif de débrayage selon au moins une des revendications précédentes, caractérisé en ce que la garniture d'étanchéité entre le piston annulaire (30, 130, 230) et la paroi extérieure du carter (19, 119, 219) délimitant vers l'extérieur la chambre annulaire est constituée par une membrane souple qui est disposée avec un déroulement de sens opposé à la membrane souple de travail (50, 150, 250) qui s'appuie sur le piston annulaire.

8. Dispositif de débrayage selon une des revendications 1 à 7, caractérisé en ce que l'élément constituant la garniture d'étanchéité entre le piston annulaire (30, 130, 230) et la paroi du carter (19, 119, 219) vers l'extérieur est tendu par son bord extérieur entre une bride annulaire de la paroi extérieure du carter et une bride d'arrêt qui lui est reliée.

9. Dispositif de débrayage selon la revendication 8, caractérisé en ce que la bride d'arrêt s'étend radialement vers l'intérieur à partir d'une partie tubulaire enfilée sur l'extrémité libre de la paroi du carter (19, 119, 219), pourvue d'une bride annulaire correspondante, la partie tubulaire étant fixée sur cette paroi extérieure.

10. Dispositif de débrayage selon une des revendications 1 à 9, caractérisé en ce qu'il comporte un guidage à glissement pour le piston annulaire (30, 130, 230) sur le manchon de guidage (17, 117, 217).

11. Dispositif de débrayage selon une des revendications 1 à 10, caractérisé en ce que le carter est conçu avec au moins deux parties formées par une coque (112, 212) constituant, au moins, en partie, la chambre annulaire (111, 211) ouverte d'un côté et fermée de l'autre et par le manchon (117, 217), qui est fixé à la coque et qui sert de guidage (117, 217) pour le piston annulaire (130, 230) ainsi que d'appui pour la membrane souple (150, 250) et qui s'étend axialement, en constituant la paroi intérieure de la coque.

12. Dispositif de débrayage selon une des revendications 1 à 11, caractérisé en ce que le carter est conçu avec au moins deux parties formées par une coque (12, 112, 212) constituant au moins en partie la chambre annulaire (11, 111, 211) ouverte d'un côté et fermée de l'autre côté et par un manchon (19, 119, 219) relié à la coque, qui s'étend à partir de celle-ci dans le sens axial et prolonge la chambre annulaire, en constituant une partie de la paroi extérieure du carter, contre laquelle se déroule radialement du côté extérieur le pli extérieur souple de la membrane souple (50, 150, 250).

13. Dispositif de débrayage selon une des revendications 1 à 12, caractérisé en ce que la membrane souple (150, 250) est enserrée radialement, intérieurement et/ou extérieurement par un bord entre la coque du carter (112, 212) et la paroi intérieure du carter (117, 217) qui s'étend axialement et forme une liaison fixe avec la coque, et/ou la paroi extérieure du carter (119, 219), ce qui assure sa fixation sur le carter.

14. Dispositif de débrayage selon la revendication 13, caractérisé en ce que le bord de la membrane souple (150, 250) est fixé radialement, intérieurement et/ou extérieurement par enserrage entre des surfaces coniques.

15. Dispositif de débrayage selon la revendication 14, caractérisé en ce qu'un bourrelet de rebord de la membrane souple (150, 250) est enserré radialement, intérieurement et/ou extérieurement, entre la coque du carter et la paroi intérieure du carter qui s'étend axialement à partir de celle-ci et/ou la paroi extérieure du carter.

16. Dispositif de débrayage selon une des revendications 1 à 15, caractérisé par la réalisation en matière plastique d'au moins la coque de carter (12, 112, 212) fermée d'un côté et/ou piston annulaire (30, 130, 230).

17. Dispositif de débrayage selon une des revendications 1 à 16, caractérisé en ce que la paroi intérieure du carter constituée par le manchon de guidage (117, 217) du piston annulaire et/ou la paroi extérieure du carter (119, 219) qui s'étend axialement à partir de la coque réalisée en matière plastique, sont constituées par des manchons métalliques.

18. Dispositif de débrayage selon la revendication 17, caractérisé par l'assemblage fixe des manchons métalliques (117, 217; 119, 219) avec la coque (112, 212) en matière plastique, fermée d'un côté, de telle sorte que les manchons enserrent des parties de la coque en forme de brides annulaires et sont fixés sur celle-ci par des bords rabattus.

19. Dispositif de débrayage selon une des revendications 1 à 18, caractérisé en ce que le manchon de guidage (17, 117, 217) est pourvu sur le côté du piston annulaire (30, 130, 230) d'une butée destinée à limiter le déplacement axial du piston.

20. Dispositif de débrayage selon une des revendications 1 à 19, caractérisé en ce qu'un ressort conique (260) qui tend à éloigner le piston du carter, est monté entre le carter (210) et le piston annulaire (230).

21. Dispositif de débrayage selon une des revendications 1 à 20, caractérisé en ce que le piston annulaire (30) est en prise avec des parties (62) dirigées radialement vers l'intérieur de rainures longitudinales (63) du manchon de guidage (17).

22. Dispositif de débrayage selon la revendication 21, caractérisé en ce qu'un ressort précontraint (60) est disposé entre le carter et le piston annulaire dans la partie qui s'étend radialement à l'intérieur du manchon (17) et en ce que ce ressort s'appuie sur un épaulement (61) du carter, d'une part, et agit sur les parties (62) du piston annulaire (30) qui s'étendent radialement vers l'intérieur à travers le manchon (17) d'autre part.

23. Dispositif de débrayage selon une des revendications 1 à 22, caractérisé en ce qu'un ressort (160) tendu entre le carter (110) et le piston annulaire (130) entourne concentriquement le carter à l'extérieur, dans le sens radial et s'appuie sur un épaulement du carter (120) d'une part, et agit sur des parties (162) du piston annulaire (130) qui s'étendent radialement vers l'extérieur, d'autre part.

24. Dispositif de débrayage selon la revendication 20, caractérisé en ce que le ressort conique (260) tendu entre le carter et le piston annulaire est monté dans la chambre annulaire (211) remplie du liquide sous pression et agit sur la base du piston annulaire (230).

25. Dispositif de débrayage selon la revendication 24, caractérisé en ce que la base du piston annulaire (230) est équipée sur le côté intérieur de la chambre annulaire d'une bague de répartition de pression (262) qui est sollicitée par le ressort conique (260) tendu entre le carter et le piston annulaire.

26. Dispositif de débrayage selon la revendication 24, caractérisé en ce que la membrane souple (250) qui recouvre la base du piston est montée entre la bague de répartition de pression (262) et la base du piston et en ce que les bords de la bague de répartition de pression sont arrondis radialement, à l'intérieur et à l'extérieur, en s'écartant de la membrane.

27. Dispositif de débrayage selon la revendication 25 ou 26, caractérisé en ce que la bague de répartition de pression (262) est pourvue d'une butée en forme de gorge annulaire dans laquelle est engagée la spire qui agit sur le piston (230) du ressort conique (260) monté dans la chambre.

28. Dispositif de débrayage selon une des revendications 1 à 27, caractérisé en ce que la paroi du carter qui est éloignée du côté ouvert de la chambre annulaire (211) est équipée de contours d'encrantage (270) pour la fixation du dispositif à une cloche d'embrayage ou à la paroi du carter d'une boîte de vitesses.

29. Dispositif de débrayage selon la revendication 28, caractérisé en ce que les contours d'encrantage sont constitués par des tenons (270) faisant saillie sur la paroi frontale du carter.

30. Dispositif de débrayage selon la revendication 28 ou 29, caractérisé en ce que les tenons (270) qui servent de contours d'encrantage sont pourvus de segments de ressorts aggissant dans le sens radial.

Fig.1

# Fig.2

Fig.4

Fig.3